# EUROPEAN PATENT SPECIFICATION

(11) **EP 1 864 037 B1**
(45) Date of publication and mention of the grant of the patent: **17.12.2008**
(21) Application number: 06765411.1
(22) Date of filing: 23.03.2006
(51) Int. Cl.: F16J 15/06, F16J 15/14, F16L 23/16

(54) **JOINING SURFACE STRUCTURE FOR A PLURALITY OF CASES**
VERBINDUNGSFLÄCHENSTRUKTUR FÜR VERSCHIEDENE KÄSTEN
STRUCTURE DE SURFACE DE JONCTION POUR PLUSIEURS BOITIERS

(30) Priority: 31.03.2005 JP 2005101621
(43) Date of publication of application: 12.12.2007
(73) Proprietor: TOYOTA JIDOSHA KABUSHIKI KAISHA, Toyota-shi, Aichi-ken, 471-8571 (JP)
(72) Inventor: TANIGUCHI, Makoto, c/o Toyota Jidosha KK, Toyota-shi, Aichi-ken 471-8571 (JP)
(74) Representative: TBK-Patent
(86) International application number: PCT/IB2006/000665
(87) International publication number: WO 2006/120512

(56) References cited:
- DE-A1- 10 229 899
- US-A- 1 961 121
- US-A- 4 101 137
- PATENT ABSTRACTS OF JAPAN vol. 1999, no. 05, 31 May 1999 (1999-05-31) -& JP 11 036838 A (TOYOTA AUTOM LOOM WORKS LTD), 9 February 1999 (1999-02-09)
- PATENT ABSTRACTS OF JAPAN vol. 017, no. 604 (M-1506), 8 November 1993 (1993-11-08) -& JP 05 180345 A (THREE BOND CO LTD), 20 July 1993 (1993-07-20)

## Description

### BACKGROUND OF THE INVENTION

### 1. Field of the Invention

The invention relates to a joining surface structure that joins a plurality of cases that form a transmission case, an oil pan or the like.

### 2. Description of the Related Art

Conventionally, a transmission case and an oil pan for a vehicle are formed by aligning joining surfaces of a plurality of cases to face each other and then tightening the cases by a tightening means such as a bolt and nut. The transmission case and oil pan also function as a tank for holding lubricating oil, hydraulic oil and the like. A gasket is disposed between the joining surfaces of the cases to seal the joining surfaces, thereby preventing oil from leaking out from the cases. For example, Japanese Patent Application Publication No. JP-A-2002-213616 describes a structure in which a liquid gasket is applied to the joining surfaces of the cases to prevent oil leaking out from the cases.

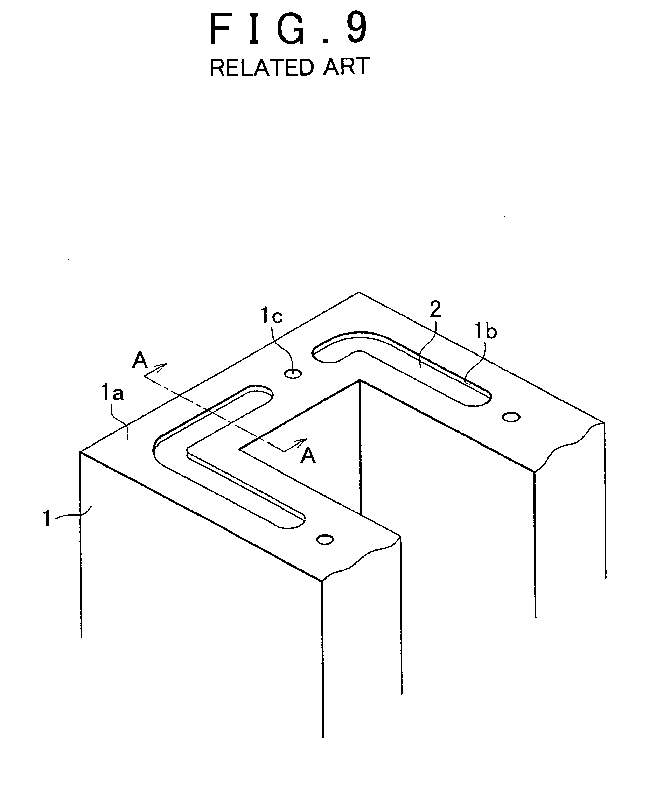

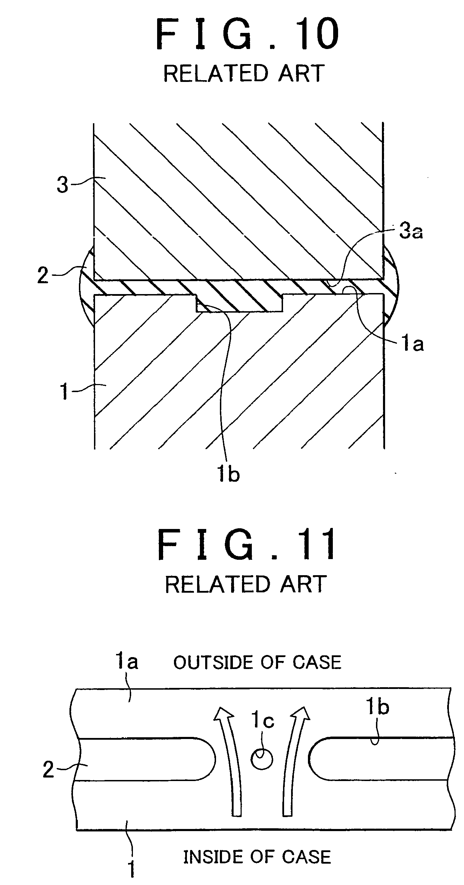

FIGS. 9 to 11 illustrate the structure of the joining surface in Japanese Patent Application Publication No. JP-A-2002-213616. As shown in FIG. 9, a joining surface 1a of a lower case 1 is provided with a groove 1b that is filled with a sealing material 2. Further, as shown in FIG. 10, the lower case 1 and an upper case 3 are tightened with the joining surface 1a of the lower case 1 and a joining surface 3a of the upper case 3 facing each other. Accordingly, the inside of the case is separated from the outside of the case by the sealing material 2, thus preventing oil from leaking out from the case.

Bolt holes 1c for tightening the case are provided in the joining surface 1a of the lower case 1. FIG. 11 shows a top view of the joining surface 1a of the lower case 1. As shown in FIG. 11, a groove 1b is discontinuously formed around the portion where the bolt holes 1c are provided. Therefore, oil is likely to leak out from the inside of the case in the direction indicated by the arrows shown in FIG. 11. However, it is difficult to form the groove 1b in the vicinity of the bolt holes 1c because this has a detrimental impact on the strength of the case.

Given this, an alternative structure could be utilized in which the groove 1b is continuously formed and in which a flange is formed at the outer side or the inner side of the case with the bolt holes 1c provided therein. In this case, however, the pressure applied to the sealing material 2 cannot be evenly dispersed to the outer side and the inner side of the case. As a result, oil is still likely to leak from the joining portion of the case.

US 4,101,137 discloses another prior art joining surface structure in accordance with the preamble of claim 1, wherein one or both mating surfaces are provided with a plurality of intersecting grooves.

### DISCLOSURE OF THE INVENTION

It is an object of the invention to provide a joining surface structure for joining case and that can reduce oil leakage from the case while maintaining strength of the case.

In a first aspect of the invention, the joining surface structure for joining a plurality of cases having joining surfaces formed with respective grooves filled with sealing material. In addition, the plurality of cases are held tightly together by a tightening structure formed on the joining surfaces. The grooves are formed in plurality, and the grooves are formed such that, when the joining surfaces of the plurality of cases are held tightly against each other, the mirror images of the grooves in each joining surface intersect with the grooves in the opposite joining surface, and any given line that connects an inside and an outside of the case intersects with the grooves in the joining surfaces.

In this first aspect the grooves are formed in both of the joining surfaces that face each other, and the plurality of grooves formed in each one of the joining surfaces do not intersect with the other grooves formed in the same joining surface.

According to the above aspect, oil leakage from the case is reduced by the plurality of grooves formed such that the mirror images of the grooves in each joining surface intersect with the grooves in the opposite joining surface, and any given line that connects an inside and an outside of the case intersects with the grooves in the joining surfaces. Oil leakage is also reduced by the sealing material that is filled in the plurality of grooves. The plurality of grooves connect with each other and form a continuous groove, whereby each groove can be made small. In addition, grooves can be formed around the tightening structure. Accordingly, oil leakage from the case can be reduced while strength of the case is maintained.

In the above aspect, the grooves are formed in both of the joining surfaces that face each other.

In the above aspect, the grooves may be formed to spread across the entire joining surface. With this structure, oil leakage is reduced across the entire joining surface, whereby oil leakage is reduced more effectively.

In the above aspect, the tightening structure may be formed at the center of the joining surfaces between the inner peripheral surface and the outer peripheral surface of the case. With this structure, the pressure applied to a sealing material can be evenly dispersed to the inside and the outside of the case. Therefore, oil leakage can be reduced more effectively.

### BRIEF DESCRIPTION OF THE DRAWINGS

FIG. 1 is a perspective view illustrating a joining surface of a lower case according to a first example that is not part of the invention;

FIG. 2 is a sectional view along arrows B-B of FIG. 1;

FIG. 3 is a sectional view along arrows C-C of FIG. 1;

FIG. 4 is a plane view illustrating the joining surface of the lower case;

FIG. 5 is a perspective view illustrating a joining surface of a lower case according to a first embodiment of the invention;

FIG. 6 is a sectional view along arrows of D-D of FIG. 5;

FIG. 7A and FIG. 7B are perspective views illustrating joining surfaces of lower cases according to another example that is not part of the invention;

FIG. 8 is a plane view illustrating a joining surface of a lower case according to still another example that is not part of the invention;

FIG. 9 is a perspective view illustrating a joining surface of a lower case according to a related art;

FIG. 10 is a sectional view along arrows A-A of FIG. 9; and

FIG. 11 is a plane view illustrating the joining surface of the lower case of the related art.

### DETAILED DESCRIPTION OF THE PREFERRED EMBODIMENTS

### First example not part of the invention

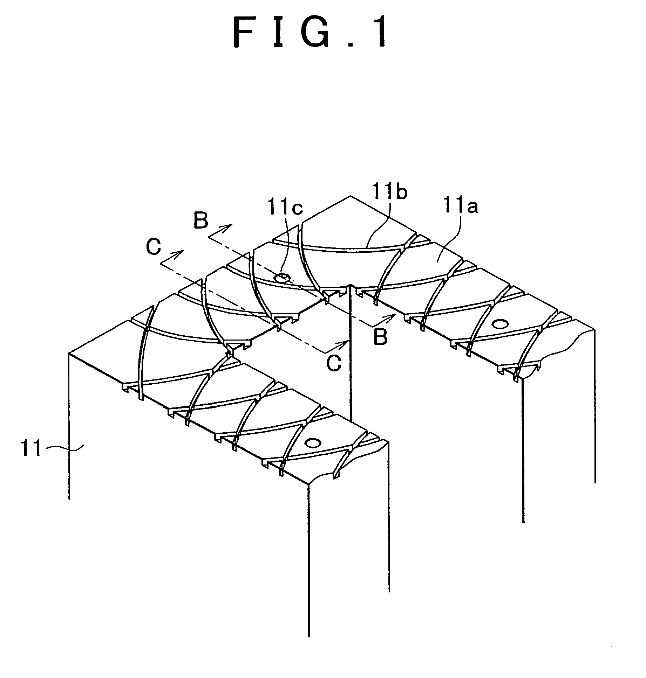

Hereinafter, a first example of a joining surface structure useful for understanding the invention will be described with reference to FIGS. 1 to 4. A joining surface 11a of a lower case 11 is shown in FIG. 1. The joining surface 11a of the lower case 1 is provided with a plurality of grooves 11b and bolt holes 11c. The plurality of grooves 11b are formed with a substantially arced shape and intersect with each other. The bolt holes 11c are used for tightening. The grooves 11b are formed to spread across the entire joining surface 11a, and are processed by cutting the upper surface of the joining surface 11a using a roller. The bolt holes 11c are formed at the center of the lower case 11 between the inner peripheral surface and the outer peripheral surface. A liquid gasket 12 is applied on the grooves 11b as a sealing material, and the lower case 11 is tightened to an upper case 13 using a bolt 14 and a nut 15. Accordingly, the liquid gasket 12 naturally dries and solidifies, whereby sealing is provided between the lower case 11 and the upper case 13.

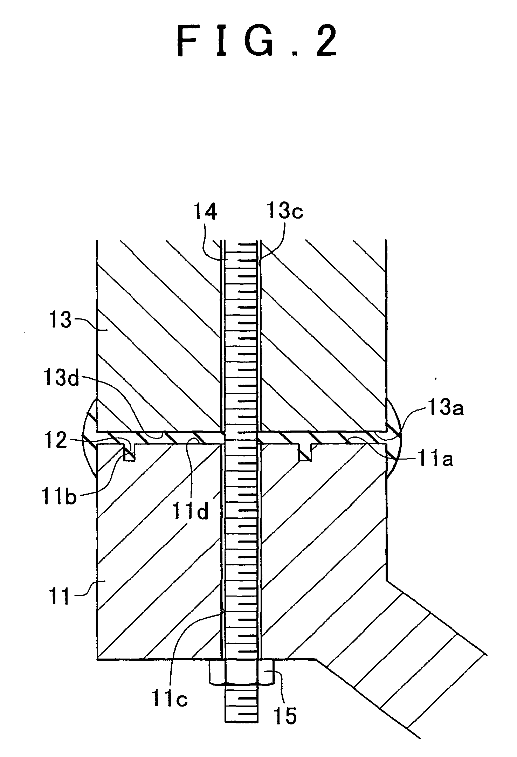

FIG. 2 is a sectional view along arrows B-B of FIG. 1, which illustrates the joining surface structure of the lower case 11 and the upper case 13. A joining surface 13a of the upper case 13 is a plane surface and is provided with bolt holes 13c in a position corresponding to one of the bolt holes 11c of the lower case 11. The joining surface 11a of the lower case 11 and the joining surface 13a of the upper case 13 are aligned and placed in contact so as to face each other, and are held by the clamping force of the bolt 14. Accordingly, the lower case 11 and the upper case 13 are held together tightly.

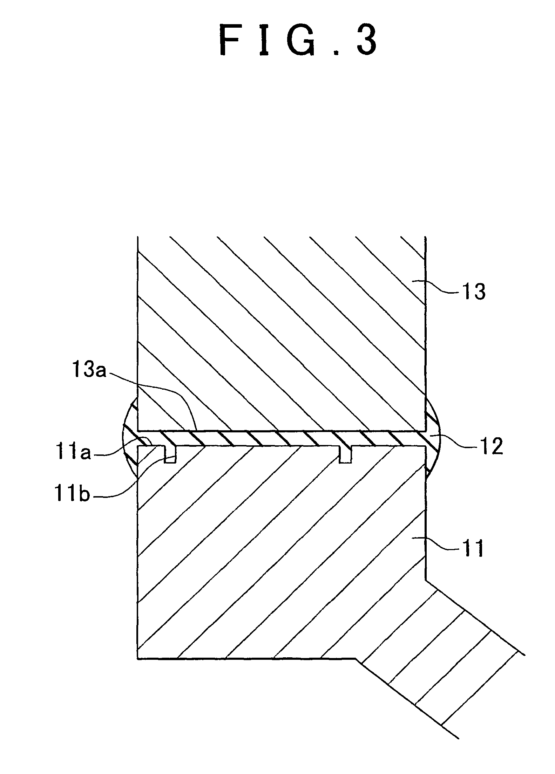

FIG. 3 is a sectional view along arrows C-C of FIG. 1, which illustrates the joining surface structure of the lower case 11 and the upper case 13. The liquid gasket 12 is filled between the joining surface 11a and the joining surface 13a and in the grooves 11b such that the inside of the case is sealed off from the outside of the case.

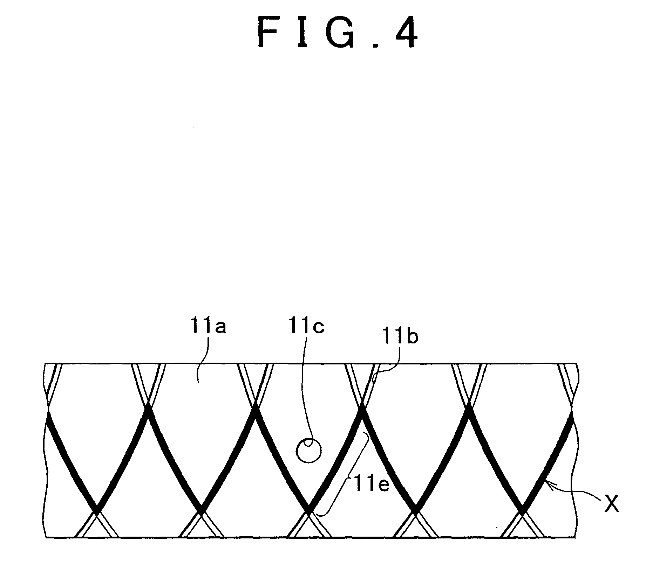

FIG. 4 is a top view of the joining surface 11a of the lower case 11. The grooves 11b intersect with each other, and connecting sections 11e of the grooves 11b connect with each other as shown by the bold lines in FIG. 4. Accordingly, a continuous groove X is formed that separates the inside of the case from the outside of the case. More specifically, the plurality of the grooves 11b are formed in the joining surface 11a such that they intersect with any given line that connect the inside and the outside of the case. Further, the grooves 11b are filled with the liquid gasket 12, whereby the inside of the case is reliably sealed off from the outside of the case by the groove X.

According to the first example, the following effects can be obtained.

(1) According to the first example, the grooves 11b intersect, and the connecting sections 11e of the grooves 11b connect with each other. Therefore, the continuous groove X is formed. Further, the grooves 11b are filled with the liquid gasket 12. Accordingly, the inside of the case is reliably sealed off from the outside of the case, thus allowing oil leakage to be reduced.

(2) According to the first example, the inside of the case is reliably sealed off from the outside of the case by the groove X even though the grooves 11b are formed around the bolt holes 11c with the liquid gasket 12 filled therein. More specifically, in this structure, the continuous groove X can be made comparatively small, thus allowing the grooves 11b to be formed around the bolt holes 11c with the liquid gasket 12 filled in the grooves 11b as well. Accordingly, it is possible to reduce oil leakage while ensuring the strength of the portion around the bolt holes 11c.

(3) According to the first example, the grooves 11b are formed to spread across the entire joining surface 11a. Therefore, it is possible to fill the liquid gasket 12 in the grooves 11b over a wide area. As a result, oil leakage can be reduced across the entire joining surface 11a. Therefore, oil leakage is reduced even more effectively.

(4) According to the first example, the bolt holes 11c are formed at the center of the case 11 between the inner peripheral surface and the outer peripheral surface. Therefore, the liquid gasket 12 can be evenly pressure filled in the grooves 11b. As a result, oil leakage is reduced even more effectively.

(5) According to the first example, the grooves 11b can be formed using a simple processing method. In addition, the grooves 11b do not need to be located accurately in any specific portion. Therefore, processing can be performed using a simpler method than the conventional one in which a drill or the like is used to accurately process the groove.

(6) According to the first example, the grooves 11b are formed in the joining surface 11a of the lower case 11 while no grooves are formed in the joining surface 13a of the upper case 13. In this structure, the grooves 11b are formed in one of the joining surfaces that face each other. Therefore, the grooves 11b can be processed on only the lower case 11, whereby the processing is made simpler.

### First embodiment of the invention

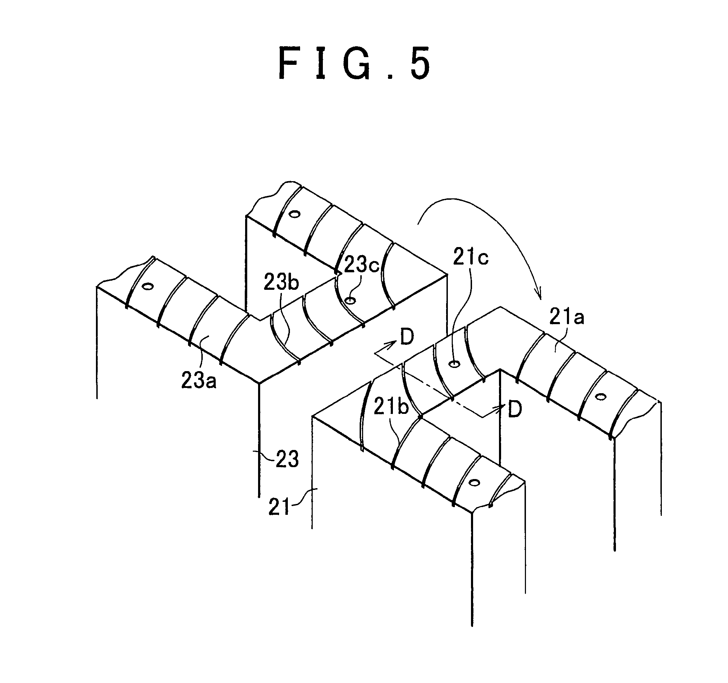

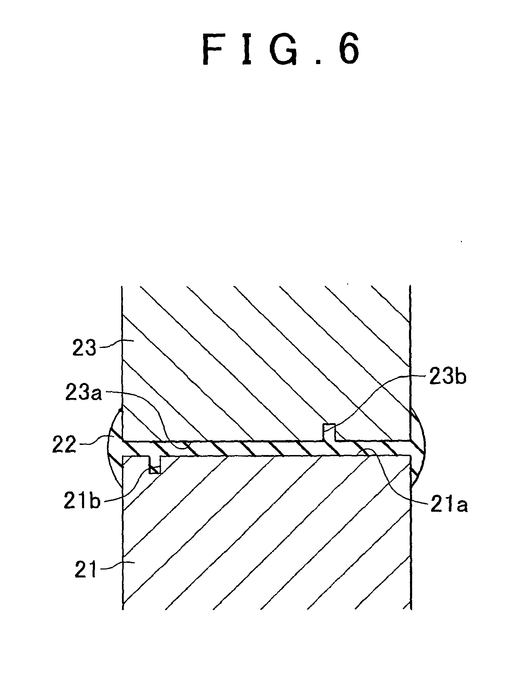

Next, a first embodiment of a joining surface structure to which the invention is applied will be described with reference to FIGS. 5 and 6. A joining surface 21a of a lower case 21 is shown in FIG. 5. The joining surface 21a of the lower case 21 is provided with a plurality of grooves 21c and bolt holes 21c. The plurality of grooves 21c are formed with a substantially arced shape. The bolt holes 21c are used for tightening. In contrast to the first example, the grooves 21b are not formed to intersect with each other. However, a joining surface 23a of an upper case 23 is provided with a plurality of grooves 23b and bolt holes 23c. The plurality of grooves 23b are formed with a substantially arced shape. The bolt holes 23c are used for tightening. The grooves 23b are also not formed to intersect with each other. In addition, the grooves 21b and the grooves 23b are formed to spread across the entire joining surfaces. The grooves 21b and the grooves 23b are processed by cutting the upper surfaces of the joining surface 21a and the joining surface 23a using a roller. The bolt holes 21c and the bolt holes 23c are formed at the center of the case between the inner peripheral surface and the outer peripheral surface. A liquid gasket 22 is applied to the grooves 21b or the grooves 23b as a sealing material and the upper case 23 is tightened to the lower case 21 using a bolt and a nut. Accordingly, the liquid gasket 22 naturally dries and solidifies, whereby sealing is performed between the lower case 21 and the upper case 23.

FIG. 6 is a sectional view along arrows D-D of FIG. 5, which illustrates the joining surfaces of the lower case 21 and the upper case 23. The space between the joining surface 21a and the joining surface 23a as well as the grooves 21b and the grooves 23b are filled with the liquid gasket 22, whereby the inside of the case is sealed off from the outside of the case.

In this structure, the grooves 21b of the lower case 21 and the grooves 23b of the upper case 23 intersect with each other when the joining surface 21a and the joining surface 23a are aligned and placed in contact so as to face each other. Further, as shown in FIG. 4 according to the first example, the connecting sections of the grooves 21b and grooves 23b connect with each other, to form a continuous groove that separates the inside of the case from the outside of the case. More specifically, when the upper case 23 and the lower case 21 are held tightly against each other, the mirror images of the grooves 21b on the joining surface 23a intersect with the grooves 23b, and the mirror images of the grooves 23b in the joining surface 21a intersect with the grooves 21b. Further, the intersecting grooves 21b and 23b are formed such that they intersect with any given line connecting between the inside and outside of the joining surface of the case. The grooves 21b and the grooves 23b are filled with the liquid gasket 22, whereby the inside of the case is reliably sealed off from the outside of the case.

According to the above first embodiment, the effects described below can be obtained in addition to effects (3) to (5) described in the first example.

(7) According to the first embodiment, the joining surface 21 a and the joining surface 23a are joined such that the grooves 21b and the grooves 23b intersect with each other. As a result, a continuous groove is formed that separates the inside of the case from the outside of the case. In addition, the grooves 21b and the grooves 23b are filled with the liquid gasket 22. Therefore, the inside of the case is sealed off from the outside of the case, whereby oil leakage is reduced.

(8) According to the first embodiment, the inside of the case is reliably sealed off from the outside of the case by the groove even though the grooves 21b and 23b that are filled with the liquid gasket 22 are formed around the bolt holes 21c and 23c. More specifically, according to the above structure, the continuous groove can be made comparatively small, whereby the grooves 21b and the grooves 23b that are filled with the liquid gasket 22 can be formed around the bolt holes 21c and 23c as well. Accordingly, oil leakage can be reduced while ensuring the strength of the case at the portion around the bolt holes 21c and 23c.

Note that the above embodiment may be changed as follows.

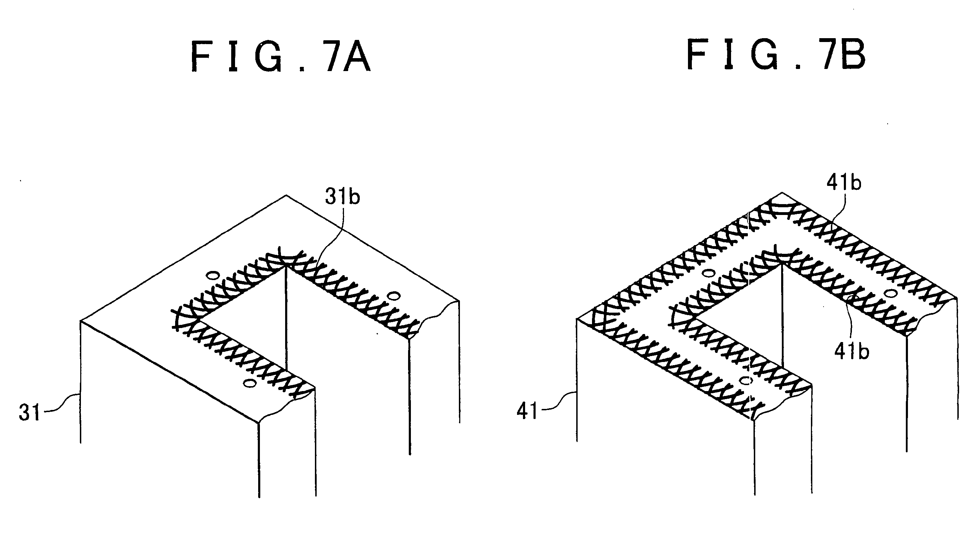

According to the first embodiment, the grooves 11b, 21b and 23b are formed to spread across the entire joining surfaces 11a, 21a and 23a. As shown in the example of FIGS. 7A and 7B, however, the grooves 11b, 21b and 23b may be formed in just certain portions of the joining surfaces. In FIG. 7A, grooves 31b are only formed in the inner peripheral surface of a lower case 31. In FIG. 7B, grooves 41b are formed in the inner peripheral surface and the outer peripheral surface of the lower case 41 without being formed in the central portion.

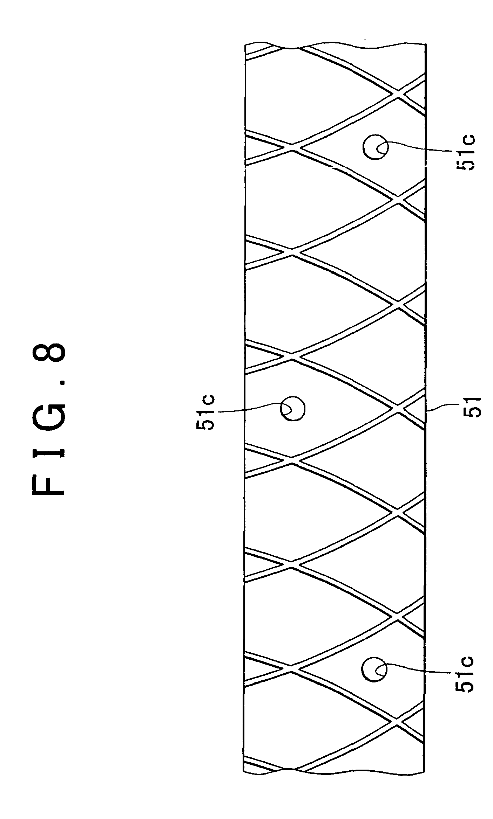

According to the first embodiment, the bolt holes 11c, 21c and 23c are formed at the center of the case between the inner peripheral surface and the outer peripheral surface. As shown in the example of FIG. 8, however, the bolt holes 51c may be formed at a position that are slightly offset from the center of the inner peripheral surface and the outer peripheral surface of a case 51.

According to the first embodiment, the bolt holes 11c, 21c and 23c are used to tighten the upper case and the lower case. However, the bolt holes may be replaced by a tap hole for a bolt and screw, or a structure using press fitted shaft and an indented hole.

According to the first embodiment, the grooves 11b, 21b and 23b are formed with a substantially arced shape. However, the grooves may be of any shape as long as a plurality of grooves are formed in joining surface such that the grooves intersect with each other and the grooves intersect with any given line that connects the inside and the outside of the case.

According to the first embodiment, the joining surface structure is used for preventing oil leakage as described. However, the above structure may be applied to the prevention of air or water leakage.

According to the first embodiment, the grooves 11b, 21b and 23b are formed with an oblong shaped cross section. However, the shape of the cross section may be another shape such as triangular or circular.

According to the first embodiment, the grooves 21b and the grooves 23b of the joining surfaces 21a and 23b are formed so that they do not intersect with each other in the case itself.

## Claims

1. A joining surface structure for joining a plurality of cases (21, 23), having joining surfaces (21a, 23a) formed with respective grooves (21b, 23b) filled with sealing material (22), the plurality of cases (21, 23) being held together by a tightening structure (21c, 23c) formed on the joining surfaces (21a, 23a), wherein
the grooves (21b, 23b) are formed in a plurality, the grooves (21b, 23b) being formed such that, when the joining surfaces (21a, 23a) of the plurality of cases (21, 23) are held tightly against each other, the mirror images of the grooves (21b, 23b) on each joining_ surface (21a, 23a) intersect with the grooves (21b, 23b) on the opposite joining surface (21a, 23a), and any given line that connects an inside and an outside of the case (21, 23) intersects with the grooves (21b, 23b) on the joining surfaces (21a, 23a), wherein the grooves (21b, 23b) are formed in both of the joining surfaces (21a, 23a) that face each other, **characterised in that** the plurality of grooves (21b, 23b) formed in each one of the joining surfaces 21a, 23a) do not intersect with the other grooves (21b, 23b) formed in the same joining surface (21a, 23a).

2. The joining surface structure according to claim 1, wherein the grooves (21b, 23b) are formed to spread across the entire joining surface (21a, 23a).

3. The joining surface structure according to claim 1, wherein the grooves (21b, 23b) are formed only in an inner peripheral side of each joining surface (21a, 23a) of the cases (21, 23).

4. The joining surface structure according to claim 1, wherein the grooves (21b, 23b) are formed in an inner peripheral side and an outer peripheral side of the joining surfaces (21a, 23a) of the case (21, 23), the grooves (21b, 23b) not being formed at a central portion of the joining surfaces (21a, 23a).

5. The joining surface structure according to any one of claim 1 to 4, wherein the tightening structure (21c, 23c) is formed at the center of the joining surfaces (21a, 23a) between the inner peripheral surface and the outer peripheral surface of the case (21, 23).

6. The joining surface structure according to any one of claims 1 to 4, wherein the tightening structure (21c, 23c) is formed at a position that is offset from the center of the joining surfaces (21a, 23a) between the inner peripheral surface and the outer peripheral surface of the case (21, 23).

7. The joining surface structure according to any one of claims 1 to 6, wherein the grooves (21b, 23b) are formed with a substantially arced shape.

## Patentansprüche

1. Verbindungsflächenstruktur zum Verbinden einer Vielzahl von Gehäusen (21, 23), die Verbindungsflächen (21a, 23a) hat, die mit jeweiligen Nuten (21b, 23b) ausgebildet sind, welche mit einem Dichtmaterial (22) gefüllt sind, wobei die Vielzahl von Gehäusen (21, 23) durch eine an den Verbindungsflächen (21a, 23a) ausgebildete Befestigungsstruktur (21c, 23c) zusammengehalten wird, wobei
die Nuten (21b, 23b) in einer Vielzahl ausgebildet sind, wobei die Nuten (21b, 23b) derart ausgebildet sind, dass sich dann, wenn die Verbindungsflächen (21a, 23a) der Vielzahl von Gehäusen (21, 23) fest gegeneinander gehalten sind, die Spiegelbilder der Nuten (21b, 23b) auf jeder Verbindungsfläche (21a, 23a) mit den Nuten (21b, 23b) auf der gegenüberliegenden Verbindungsfläche (21a, 23a) schneiden und sich eine beliebige Linie, die eine Innenseite und eine Außenseite des Gehäuses (21, 23) verbindet, mit den Nuten (21b, 23b) auf den Verbindungsflächen (21a, 23a) schneidet, wobei die Nuten (21b, 23b) in beiden der einander zugewandten Verbindungsflächen (21a, 23a) ausgebildet sind, **dadurch gekennzeichnet, dass**
sich die Vielzahl der Nuten (21b, 23b), die in jeder der Verbindungsflächen (21a, 23a) ausgebildet sind, nicht mit den anderen Nuten (21b, 23b) schneiden, die in derselben Verbindungsfläche (21a, 23a) ausgebildet sind.

2. Verbindungsflächenstruktur nach Anspruch 1, wobei die Nuten (21b, 23b) ausgebildet sind, um sich über die gesamte Verbindungsfläche (21a, 23a) zu erstrecken.

3. Verbindungsflächenstruktur nach Anspruch 1, wobei die Nuten (21b, 23b) nur an einer Innenrandseite von jeder Verbindungsfläche (21a, 23a) des Gehäuses (21, 23) ausgebildet sind.

4. Verbindungsflächenstruktur nach Anspruch 1, wobei die Nuten (21b, 23b) an einer Innenrandseite und einer Außenrandseite der Verbindungsflächen (21a, 23a) des Gehäuses (21, 23) ausgebildet sind, wobei die Nuten (21b, 23b) nicht an einem Mittelabschnitt der Verbindungsflächen (21a, 23a) ausgebildet sind.

5. Verbindungsflächenstruktur nach einem der Ansprüche 1 bis 4, wobei die Befestigungsstruktur (21c, 23c) an der Mitte der Verbindungsflächen (21a, 23a) zwischen der Innenrandfläche und der Außenrandfläche des Gehäuses (21, 23) ausgebildet ist.

6. Verbindungsflächenstruktur nach einem der Ansprüche 1 bis 4, wobei die Befestigungsstruktur (21c, 23c) an einer Position, die von der Mitte der Verbindungsflächen (21a, 23a) versetzt ist, zwischen der Innenrandfläche und der Außenrandfläche des Gehäuses (21, 23) ausgebildet ist.

7. Verbindungsflächenstruktur nach einem der Ansprüche 1 bis 6, wobei die Nuten (21b, 23b) mit einer im Wesentlichen bogenförmigen Form ausgebildet sind.

## Revendications

1. Structure de surfaces de jonction pour la jonction d'une pluralité de boîtiers (21, 23), ayant des surfaces de jonction (21a, 23a) formées avec des rainures respectives (21b, 23b) remplies d'un matériau de scellement (22), la pluralité de boîtiers (21, 23) étant maintenus ensemble par une structure de serrage (21c, 23c) formée sur les surfaces de jonction (21a, 23a), dans laquelle
les rainures (21b, 23b) sont formées en une pluralité, les rainures (21b, 23b) étant formées de telle sorte que, lorsque les surfaces de jonction (21a, 23a) de la pluralité de boîtiers (21, 23) sont maintenues étroitement l'une contre l'autre, les images symétriques des rainures (21 b, 23b) sur chaque surface de jonction (21a, 23a) croisent les rainures (21b, 23b) sur la surface de jonction opposée (21a, 23a), et une ligne donnée quelconque qui relie l'intérieur et l'extérieur du boîtier (21, 23) croise les rainures (21b, 23b) sur les surfaces de jonction (21a, 23a), où les rainures (21b, 23b) sont formées dans les deux surfaces de jonction (21a, 23a) qui se regardent, **caractérisée en ce que** la pluralité de rainures (21b, 23b) formées dans chacune des surfaces de jonction (21a, 23a) ne croisent pas les autres rainures (21b, 23b) formées dans la même surface de jonction (21a, 23a).

2. Structure de surfaces de jonction selon la revendication 1, dans laquelle les rainures (21b, 23b) sont formées de manière à s'étaler sur toute la surface de jonction (21a, 23a).

3. Structure de surfaces de jonction selon la revendication 1, dans laquelle les rainures (21b, 23b) sont formées uniquement dans un côté périphérique interne de chaque surface de jonction (21a, 23a) du boîtier (21, 23).

4. Structure de surfaces de jonction selon la revendication 1, dans laquelle les rainures (21b, 23b) sont formées dans un côté périphérique interne et dans un côté périphérique externe des surfaces de jonction (21a, 23a) du boîtier (21, 23), les rainures (21b, 23b) n'étant pas formées au niveau d'une partie centrale des surfaces de jonction (21a, 23a).

5. Structure de surfaces de jonction selon l'une quelconque des revendications 1 à 4, dans laquelle la structure de serrage (21c, 23c) est formée au centre des surfaces de jonction (21a, 23a) entre la surface périphérique interne et la surface périphérique externe du boîtier (21, 23).

6. Structure de surfaces de jonction selon l'une quelconque des revendications 1 à 6, dans laquelle la structure de serrage (21c, 23c) est formée à une position qui est décalée du centre des surfaces de jonction (21a, 23a) entre la surface périphérique interne et la surface périphérique externe du boîtier (21, 23).

7. Structure de surfaces de jonction selon l'une quelconque des revendications 1 à 6, dans laquelle les rainures (21b, 23b) sont constituées sous une forme essentiellement en arc.
